# EUROPÄISCHE PATENTSCHRIFT

(11) **EP 4 316 738 B1**
(45) Veröffentlichungstag und Bekanntmachung des Hinweises auf die Patenterteilung: **09.04.2025**
(21) Anmeldenummer: 22203844.0
(22) Anmeldetag: 26.10.2022
(51) Int. Cl.: B25J 5/00, B25J 15/04, B25J 11/00, B25F 5/00

(54) **HALTERAHMEN UND BAUROBOTER MIT EINER WERKZEUGSCHNITTSTELLE**
SUPPORT FRAME AND CONSTRUCTION ROBOT HAVING A TOOL INTERFACE
CADRE DE SUPPORT ET ROBOT DE CONSTRUCTION DOTÉ D'UNE INTERFACE D'OUTIL

(30) Priorität: 03.08.2022 EP 22188419
(43) Veröffentlichungstag der Anmeldung: 07.02.2024
(73) Patentinhaber: Hilti Aktiengesellschaft, 9494 Schaan (LI)
(72) Erfinder: SCHMID, Tobias, 86875 Emmenhausen (DE); HARTMANN, Markus, 87665 Mauerstetten (DE); NITZSCHNER, Michael, 86156 Augsburg (DE); HURKA, Florian, 86459 Margertshausen (DE); FÜRFANGER, Georg, 81373 München (DE); KOSCHECK, David, 86899 Landsberg (DE); BRUGGER, Peter, 6800 Feldkirch (AT); BRITZ, Rory, 82319 Starnberg (DE)
(74) Vertreter: Hilti Aktiengesellschaft Corporate Intellectual Property

(56) Entgegenhaltungen:
- EP-A1- 4 016 212
- DE-A1- 102020 124 672
- DE-U1- 202014 003 133
- US-A1- 2018 326 507
- US-A1- 2020 254 628
- US-B2- 11 389 970

## Beschreibung

Die Erfindung befasst sich mit der Ausführung von Bauaufgaben mithilfe eines Bauroboters. Insbesondere betrifft sie einen Bauroboter mit einem Manipulator, an dem sich eine Werkzeugschnittstelle befindet, sowie einen Halterahmen für ein Werkzeug. Ein Bauroboter mit einem Manipulator mit einer Werkzeugschnittstelle für unterschiedliche Werkzeuge ist aus der EP 4016212 A1 bekannt. Eine Anordnung, bei der ein Werkzeughalter an seiner Außenseite eine Kupplung für die Verbindung der Werkzeughalter mit einem Roboter und für die Trennung des Werkzeughalters von einem Roboter aufweist ist aus DE102020124672A1 bekannt. Weiterhin zeigt die DE202014003133U1 einen mit einem der Glieder eines Manipulatorarms, insbesondere mit einem Endglied eines Manipulatorarms verbundenen Greifer, der ausgebildet ist, ein Werkzeug zu halten, derart, dass das Werkzeug durch Einstellen der Gelenke des Manipulatorarms im Raum zu halten und/oder zu bewegen ist. In US11389970B2 wird ein Werkzeughalter offenbart, der verschiedene Arten von handelsüblichen Werkzeugen aufnehmen kann und mit einer Roboterhand gekoppelt werden kann. Eine Schraubvorrichtung und ein Verbindungselement zum Ankoppeln eines Werkzeugs an einen Roboterarm ist aus US2020254628A1 bekannt. US20183526507A1 offenbart ein mobiles Roboterbohrgerät zum Bohren von Decken und Wänden. Sie bezieht sich ferner auf eine schwingungsdämpfende Baugruppe und auf ein mobiles Roboterbohrgerät, das diese verwendet.

Es besteht ein hoher Bedarf an kostengünstigem Wohn- und Arbeitsraum. Derzeit gibt es pintensive Bemühungen, durch möglichst weitgehende Automatisierung Herstellungskosten von Gebäuden zu senken und zudem Gesundheitsrisiken für Bauarbeiter zu mindern. Hierzu werden vermehrt Bauroboter eingesetzt.

Aufgrund ihrer Komplexität weisen jedoch bislang Bauroboter sehr hohe Herstellungskosten auf.

Wünschenswert ist es daher, Bauroboter möglichst stark auslasten zu können, um zeitbezogene Kosten senken zu können. Dies ist umso eher erreichbar, je flexibler der Bauroboter einsetzbar ist, insbesondere je eher der Bauroboter für unterschiedliche Arten von Bauaufgaben verwendbar ist.

Aufgabe der vorliegenden Erfindung ist es daher, Lösungen anzubieten, durch die eine möglichst breite Vielfalt von Bauaufgaben mittels eines Bauroboters ausgeführt werden können. Gelöst wird die Aufgabe zunächst durch einen Halterahmen zur Aufnahme eines Werkzeugs, das eine Akkuschnittstelle zur lösbaren, insbesondere werkzeuglos lösbaren, Aufnahme eines Akkumulators aufweist, wobei der Halterahmen einen Halteabschnitt aufweist, der komplementär zu der Akkuschnittstelle ausgebildet ist, und wobei der Halterahmen eine Anschlussstelle zum Anschluss an einen Manipulator eines Bauroboters aufweist.

Das Werkzeug, für das der Halterahmen vorgesehen ist, kann insbesondere eine mit einem wiederaufladbaren Akkumulator betreibbare Handwerkzeugmaschine sein.

Somit kann das Werkzeug am Halterahmen angeordnet werden, wobei der Halteabschnitt in die Akkuschnittstelle greift, sodass das Werkzeug am Halterahmen einfach fixiert werden kann. Somit können unterschiedliche Werkzeuge, insbesondere unterschiedliche Arten von Werkzeugen an demselben Halterahmen sicher angeordnet werden.

Dabei kann ausgenutzt werden, dass unterschiedliche Arten von Werkzeugen oftmals die gleichen Akkuschnittstellen aufweisen. Dies kann insbesondere bei akkubetriebenen Werkzeugen, beispielsweise akkubetriebenen Handwerkzeugmaschinen wie Handbohrmaschinen, insbesondere Gesteinsbohrmaschinen, Nagelsetzmaschinen, Schleifmaschinen, Sägemaschinen, Meißelmaschinen oder dergleichen, der Fall sein.

Der Akkuschnittstelle können dabei wenigstens zwei Funktionalitäten zukommen: ersten kann die Akkuschnittstelle ausgebildet sein, den Akkumulator sicher an der Werkzeugmaschine zu halten.

Zweitens kann die Akkuschnittstelle zur Übertragung von Betriebsenergie eingerichtet sein. Die Betriebsenergie kann dabei unidirektional, insbesondere vom Akkumulator zur Werkzeugmaschine hin, übertragbar sein. Sie kann auch bidirektional übertragbar sein, beispielsweise um den Akkumulator im Wege der Rekuperation wiederaufzuladen. Die Akkuschnittstelle kann noch weitere Funktionalitäten aufweisen. Insbesondere kann sie auch zur Signalübertragung zwischen dem Akkumulator und der Werkzeugmaschine eingerichtet sein. Auch diese Signalübertragung kann unidirektional oder bidirektional sein.

Die Akkuschnittstelle kann beispielsweise Führungsschienen aufweisen. Der Halterahmen kann einen zu den Führungsschienen komplementär ausgebildeten Schlitten aufweisen. Dann kann der Halterahmen mit seinem Schlitten auf die Führungsschienen aufgeschoben werden. Die Akkuschnittstelle und / oder der Halterahmen können einen Rastmechanismus aufweisen. Dann kann der Halterahmen an der Akkuschnittstelle nach dem Aufschieben auf die Führungsschienen verrastet sein. Der Rastmechanismus kann werkzeuglos lösbar ausgebildet sein.

Bei einer Klasse von Ausführungsbeispielen kann der Halterahmen einen an einer vom Halteabschnitt verschiedenen Stelle befindlichen Lagerarm zur zusätzlichen Lagerung des Werkzeugs aufweisen. Der Halterahmen kann insbesondere ausgebildet sein, das Werkzeug an mehreren, unterschiedlichen Punkten zu lagern, insbesondere an den mehreren Punkten zu halten. Durch eine solche Mehrpunkt-Lagerung können während des Betriebs des Werkzeugs auftretende Drehmomente besser vom Halterahmen aufgenommen werden. Bei Bedarf kann diesen Drehmomenten besser entgegengewirkt werden.

Ist das Werkzeug als Handwerkzeugmaschine ausgebildet, weist es oftmals einen Verbindungsabschnitt für einen Seitenhandgriff auf. Der Lagerarm des Halterahmens kann dann so positioniert sein, dass er, wenn der Halterahmen an der Akkuschnittstelle montiert ist, das Werkzeug an dem Verbindungsabschnitt des Werkzeugs hält, beispielsweise umgreift.

Um eine übermäßige Belastung und insbesondere Beschädigungen des Manipulators zu vermeiden, kann der Halterahmen wenigstens einen Vibrationsdämpfer aufweisen. Der Vibrationsdämpfer kann Schaummaterial und / oder ein elastisches oder zumindest ein teilweise elastisches Material aufweisen. Er kann eingerichtet sein, eine Übertragung von Schwingungen von der Werkzeugmaschine zum übrigen Halterahmen zu reduzieren.

Zwischen dem Halteabschnitt und der Anschlussstelle kann wenigstens eine elektrische Verbindung ausgebildet sein. Somit kann Strom, beispielsweise zur Versorgung des Werkzeugs mit Betriebsenergie oder zur Übertragung von Signalen, zwischen dem Halteabschnitt und der Anschlussstelle und damit zwischen dem im Halterahmen montierten Werkzeug und dem am Halteabschnitt montierten Manipulator unidirektional oder bidirektional übertragbar sein.

Um möglichst viele Arten von Werkzeugen mit dem Halterahmen und infolge mit einem bestimmten Bauroboter verwenden zu können, die elektrische Verbindung an elektrische Parameter des Werkzeugs und / oder des Bauroboters anzupassen. Dazu kann der Halterahmen einen Wandler zur Wandlung wenigstens eines elektrischen Parameters entlang der elektrischen Verbindung aufweist. Der Wandler kann beispielsweise ein DC/DC-Wandler, ein AC/DC-Wandler, ein DC/AC-Wandler, ein Verstärker, ein Begrenzer, ein Impedanzwandler, ein Signalcodewandler oder dergleichen sein. Der Wandler kann fernsteuerbar und / oder programmierbar sein. Somit ist denkbar, dass ein Benutzer des Halterahmens und / oder der Bauroboter den Wandler in Abhängigkeit von einer Art des zu montierenden und / oder des montierten Werkzeugs programmiert und / oder fernsteuert.

Insbesondere, wenn unterschiedliche Werkzeuge, die jeweils eine von wenigstens zwei Arten von Akkuschnittstellen aufweisen, verfügbar sind, ist es denkbar, wenigstens **zwei verschiedene Halterahmen** der vorangehend beschriebenen Art bereitzustellen, wobei die wenigstens zwei verschiedenen Halterahmen jeweils eine Anschlussstelle aufweisen, die komplementär zu jeweils einer anderen der Arten von Akkuschnittstellen ausgebildet ist.

In den Rahmen der Erfindung fällt des Weiteren ein **Bauroboter** zur Ausführung von Bauaufgaben auf einer Hochbau-Baustelle, einer Tiefbau-Baustelle und / oder im Stahlbau, beispielsweise auf einer Gas- oder Ölplattform, umfassend eine, insbesondere motorisierte, mobile Plattform, und einen Manipulator, wobei der Manipulator eine Werkzeugschnittstelle aufweist, die komplementär zur der Anschlussstelle eines Halterahmens der hier beschriebenen Art ausgebildet ist und ein Halterahmen der hier beschriebenen Art an der Werkzeugschnittstelle des Manipulators angeordnet ist.

Somit kann im Halterahmen ein Werkzeug, insbesondere an der Akkuschnittstelle, montiert werden. Der Halterahmen kann wiederum mit seiner Anschlussstelle an der Werkzeugschnittstelle des Manipulators montiert werden. Somit werden eine Art, eine Form und / oder andere Spezifikationen des Werkzeugs durch den Halterahmen abstrahiert. Zum Bauroboter hin kann eine einheitliche Anschlussmöglichkeit für Systeme aus Halterahmen und Werkzeug ausgebildet sein. Eine Vielzahl gut verfügbarer und damit kostengünstigem Werkzeuge können somit mit dem Bauroboter nutzbar sein.

Zur Zwischenablage von Werkzeugen kann der Bauroboter ein Vorratsmagazin aufweisen. Im Vorratsmagazin kann wenigstens ein Werkzeug mit einem Halterahmen der hier beschriebenen Art aufgenommen sein.

Am Manipulator kann ein Halterahmen der hier beschriebenen Art montiert sein. Am Halterahmen kann ein Werkzeug, insbesondere mit seiner Akkuschnittstelle, angeordnet sein. Denkbar ist, dass das Werkzeug derart eingerichtet ist, dass über seine Akkuschnittstelle und / oder drahtlos wenigstens eine Werkzeugfunktion, beispielsweise eine Motorleistung, eine Drehfrequenz und / oder ein Betriebsmodus, steuerbar ist. Somit kann der Bauroboter das Werkzeug steuern, um beispielsweise eine Bauaufgabe oder zumindest einen Teil der Bauaufgabe mit dem Werkzeug auszuführen.

Dazu ist denkbar, dass das Werkzeug eine Datenschnittstelle aufweist. Die Datenschnittstelle kann in die Akkuschnittstelle integriert sein. Sie kann alternativ oder ergänzend auch funkbasiert sein. Das Werkzeug kann dann über die Datenschnittstelle fernsteuerbar sein.

Beispielsweise kann die Datenschnittstelle eingerichtet sein, Steuerbefehle, Eigenschaftsdaten und / oder Zustandsdaten zu übertragen.

So kann beispielsweise ein Betriebsmodus und / oder ein Betriebszustand des Werkzeugs steuerbar sein. Insbesondere kann das Werkzeug ferngesteuert einschaltbar und / oder ausschaltbar sein.

Denkbar ist auch, dass wenigstens eine Arbeitsleistung, eine Drehrichtung, eine Drehfrequenz, ein Drehmoment, oder eine Schlagfrequenz ferngesteuert einstellbar sind.

Bei Werkzeugen, die eine Schlagfunktion aufweisen, kann es besonders günstig sein, wenn auch die Schlagfunktion ferngesteuert einstellbar ist. So kann der Bauroboter beispielsweise zum Bohren eines Loches in Beton zunächst mit deaktivierter Schlagfunktion zu bohren beginnen und später die Schlagfunktion aktivieren, um das Risiko unerwünschter ausgebrochener Bohrlochränder zu minimieren.

Das Werkzeugs kann eingerichtet sein, als Eigenschaftsdaten beispielsweise wenigstens ein Identifikationsdatum, ein Leistungsvermögen, beispielsweise eine maximal verfügbare Schlagenergie und / oder eine maximal verfügbare Arbeitsleistung, abrufbar, insbesondere über die Datenschnittstelle abrufbar, bereit zu stellen.

Auch ist denkbar, dass das Werkzeug eingerichtet ist, wenigstens einen Betriebszustand der Werkzeugmaschine, beispielsweise wenigstens eine Drehzahl, eine Temperatur, ein Maß für einen Verschleiß einer Komponenten, oder dergleichen, abrufbar, insbesondere über die Datenschnittstelle abrufbar, bereit zu stellen.

Dazu ist es vorteilhaft, wenn die Datenschnittstelle bidirektional ausgebildet ist. Dann können sowohl beispielweise Steuerbefehle vom Bauroboter zum Werkzeug als auch Eigenschafts- und / oder Zustandsdaten vom Werkzeug zum Bauroboter übermittelt werden. Denkbar ist dabei auch, dass Steuerbefehle und / oder Eigenschafts- und / oder Zustandsdaten alternativ oder ergänzend auch in der jeweiligen Gegenrichtung übertragbar sind.

Das Werkzeug kann wenigstens eine Schutzeinrichtung zum Schutz eines Benutzers bei manueller Nutzung des Werkzeugs aufweisen. Die Schutzeinrichtung kann beispielsweise eine Anlaufsperre, insbesondere eine Wiederanlaufsperre, sein, die ein Starten des Motors durch bloßes Anlegen einer Versorgungsspannung, insbesondere ohne zusätzliches Betätigen eines Betätigungselements, verhindert.

Der Bauroboter kann zur Ausführung von Bauarbeiten auf einer Hochbau-Baustelle und / oder einer Tiefbau-Baustelle und / oder einer, insbesondere Stahl-basierten, Industrieanlage, beispielsweise einer Ölplattform, ausgebildet sein. Er kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Er kann ein oder mehrere Werkzeuge aufweisen. Das wenigstens eine Werkzeug kann mittels des Halterahmens am Bauroboter, insbesondere am Manipulator, montiert sein. Das Werkzeug kann ein Trennwerkzeug, ein Schleifwerkzeug und / oder ein Setzwerkzeug umfassen. Denkbar ist auch, dass das Werkzeug zum Markieren ausgebildet ist. Das Werkzeug kann beispielsweise ein Farbsprühgerät aufweisen. Alternativ oder ergänzend kann es auch ein Messwerkzeug, beispielsweise einen Distanzmesser, aufweisen.

Der Bauroboter weist einen Manipulator auf. Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Der Bauroboter weist auch eine mobile Plattform auf. Die mobile Plattform kann ein Räderfahrwerk und / oder ein Kettenfahrwerk umfassen. Die mobile Plattform kann wenigstens zwei Freiheitsgrade aufweisen. Der Bauroboter kann insgesamt wenigstens zehn Freiheitsgrade aufweisen. Denkbar ist alternativ auch, dass die mobile Plattform eine Flugplattform ist oder eine solche umfasst. Beispielsweise kann der Bauroboter auch als Flugdrohne ausgebildet sein. Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter;
- Fig. 2: ein Werkzeug mit einer Akkuschnittstelle;
- Fig. 3: eine schematische Seitenansicht eines in einem Halterahmen aufgenommenen Werkzeugs;
- Fig. 4: eine schematische Querschnittsansicht einer Akkuschnittstelle mit einem darin aufgenommenen Halteabschnitt;
- Fig. 5: eine schematische Darstellung eines Halterahmens mit einer elektrischen Verbindung und einem Wandler; und
- Fig. 6: eine schematische Darstellung eines Halterahmens mit Vibrationsdämpfern, in den ein Werkzeug aufgenommen ist.

In der nachfolgenden Beschreibung der Figuren werden zur Erleichterung des Verständnisses der Erfindung für gleiche oder sich funktional entsprechende Elemente jeweils die gleichen Bezugszeichen verwendet.

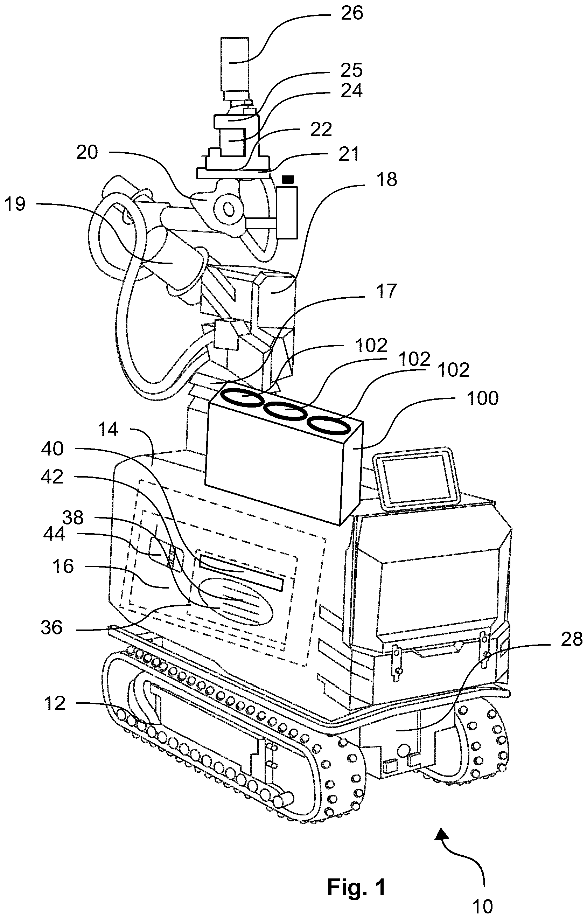

**Fig. 1** zeigt einen Bauroboter **10** mit einem als Kettenfahrwerk ausgebildeten, motorisierten Fahrwerk **12,** einem in einem Gehäuse **14** ausgebildeten Steuerraum **16** und einem oberseitig des Gehäuses 14 angeordneten Manipulator **18.** Der Manipulator 18 umfasst eine Hubvorrichtung **17** zur vertikalen Verlagerung und einen multiaxial steuerbaren Arm **19.**

Am freien Ende des Arms 19 befindet sich ein Endeffektor **20** mit einer Werkzeugschnittstelle **21.**

An der Werkzeugschnittstelle 21 ist ein Werkzeug **24,** insbesondere eine Steinbohrwerkzeugmaschine, mit einer Staubabsaugungsvorrichtung **26,** lösbar angeordnet.

Um das Werkzeug 24 an der Werkzeugschnittstelle 21 lösbar anzuordnen, ist das Werkzeug in einem Halterahmen **22** aufgenommen. Wie nachfolgend näher erläutert wird, ist der Halterahmen 22 über eine Akkuschnittstelle des Werkzeugs 24 mit diesem verbunden.

Der Halterahmen 22 ist an der Werkzeugschnittstelle 21 montiert. Die Werkzeugschnittstelle 21 ist dazu zur lösbaren Verbindung des Halterahmens 22 und damit auch des Werkzeugs 24 ausgebildet.

Der Halterahmen 22 weist einen Lagerarm **25** auf, an dem das Werkzeug 24 zusätzlich vom Halterahmen 22 gelagert ist.

Der Bauroboter 10 wird durch einen Energiespeicher **28,** insbesondere in Form eines wiederaufladbaren, Lithium-basierten Akkumulators, mit Betriebsenergie versorgt. Er ist somit kabellos nutzbar.

Ferner weist der Bauroboter 10 ein Vorratsmagazin **100** auf. Das Vorratsmagazin 100 weist mehrere Ablageplätze 102 auf. An freien Ablageplätzen 102 kann das Werkzeug 24 zur Aufbewahrung und gegebenenfalls späteren Wiederverwendung abgelegt werden. Auch können weitere Elemente, beispielsweise weitere Werkzeuge, in den Ablageplätzen 102 zur späteren Verwendung, insbesondere mit dem Bauroboter 10, aufbewahrt werden. Vorzugsweise sind im Vorratsmagazin 100 aufgenommene Werkzeuge ebenfalls mit dem Halterahmen 22 entsprechenden Halterahmen ausgestattet, sodass diese über ihre jeweiligen Halterahmen ebenfalls an der Werkzeugschnittstelle 21 montierbar sind.

Der Bauroboter 10 weist, vorzugsweise innerhalb des Gehäuses 14, eine im Steuerraum 16 angeordnete Steuerung **36** auf. Die Steuerung 36 umfasst einen Speicherbaustein **38** und einen Mikroprozessor **40.**

Die Steuerung 36 ist mit ausführbarem Programmcode **42** ausgestattet. Der Programmcode 42 ist abrufbar und auf dem Mikroprozessor 40 ausführbar in dem Speicherbaustein 38 gespeichert. Über eine Kommunikationsschnittstelle **44** kann die Steuerung 36 ein Cloudbasiertes Rechnersystem (in Fig. 1 nicht dargestellt) kontaktieren und Daten, beispielsweise Daten zur Art auszuführender Bauaufgaben, zugehörige Positions- und / oder Lagedaten und / oder Steuerbefehle, austauschen.

Der Bauroboter 10 ist zur Ausführung von Bauaufgaben, beispielsweise von Bohrarbeiten in Decken und Wänden, auf einer Baustelle, insbesondere auf einer Hochbau-Baustelle, einer Tiefbau-Baustelle und / oder auf einer Stahlbau-Baustelle, beispielsweise eine Öl- oder eine Gasförderplattform, ausgebildet. Insbesondere kann die Steuerung 36 den Manipulator 18 derart steuern, dass Bauarbeiten an Decken und Wänden ausführbar sind. Ein Beispiel einer solchen Bauaufgabe kann beispielsweise das Bohren eines Bohrlochs, insbesondere mit einer bestimmten Bohrtiefe und / oder einem bestimmten Bohrlochdurchmesser, in eine Betondecke mit dem als Steinbohrwerkzeugmaschine ausgebildeten Werkzeug 24 sein.

Der Bauroboter 10 ist eingerichtet, selbsttätig das an der Werkzeugschnittstelle 21 angeordnete Werkzeug 24 von dieser zu lösen sowie ein zweites Werkzeug an der Werkzeugschnittstelle 21 zu montieren. Mithilfe seines Manipulators 18 kann der Bauroboter 10 das Werkzeug 24 zu einem freien Ablageplatz 102 bringen und dann den Halterahmen 22 von der Werkzeugschnittstelle 21 lösen. Das zweite Werkzeug kann von einem der übrigen Ablageplätze 102 aufgenommen und mit seinem Halterahmen an der Werkzeugschnittstelle 21 montiert werden.

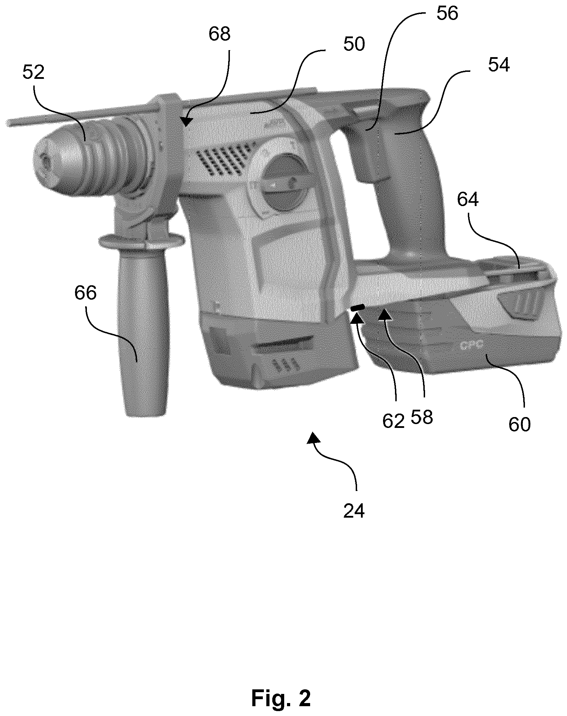

**Fig. 2** zeigt ein Werkzeug 24. Das Werkzeug 24 ist eine akkubetriebene Gesteinsbohrwerkzeugmaschine. Es kann in den Halterahmen 22 (siehe Fig. 1) aufgenommen werden.

Das Werkzeug 24 weist einen Grundkörper **50** auf, aus dem einenends eine Werkzeugaufnahme **52** herausragt. Die Werkzeugaufnahme 52 ist zur Aufnahme von Bohr- oder Meißelwerkzeugen ausgebildet. Sie kann durch einen innerhalb des Grundkörpers 50 befindlichen Motor drehend und / oder schlagend angetrieben werden.

Anderenends weist sie einen Handgriff **54** auf. Am Handgriff 54 befindet sich ein Betätigungselement **56,** mit dem das Werkzeug 24 manuell steuerbar ist. Insbesondere kann mit dem Betätigungselement 56 ein Bohrvorgang gestartet, gestoppt oder eine Drehzahl reguliert werden.

Weiter weist das Werkzeug 24 eine Akkuschnittstelle **58** auf. Die Akkuschnittstelle 58 ist zur Aufnahme von wiederaufladbaren Akkumulatoren, beispielsweise des Akkumulators **60,** ausgebildet. Sie dient bei beispielsweise manueller Verwendung des Werkzeugs 24 unter anderem zur Fixierung des Akkumulators 60 am Werkzeug 24, zur Übertragung von Betriebsenergie zwischen dem Akkumulator 60 und dem Werkzeug 24 sowie zur Signalübertragung zwischen diesen beiden.

In der in Fig. 2 dargestellten Situation ist der Akkumulator 60 in etwa zur Hälfte auf die Akkuschnittstelle 58 aufgeschoben. Die Akkuschnittstelle 58 weist einen Rastmechanismus **62** auf, der in Fig. 2 aus Darstellungsgründen lediglich schematisch angedeutet ist. Der Rastmechanismus 62 ist derart ausgebildet, dass dem vollständig auf die Akkuschnittstelle 58 aufgeschobenen Akkumulator 60 eine Widerstandskraft entgegenwirkt, sodass der Akkumulator 60 der Akkuschnittstelle 58 entnommen werden kann, wenn die durch den Rastmechanismus 62 erzeugte Widerstandskraft überwunden wird. So erlaubt der Rastmechanismus 62 eine werkzeuglose Montage als auch Demontage und dennoch einen ausreichend festen Sitz des vollständig aufgeschobenen Akkumulators 60 am Werkzeug 24.

Um den Akkumulator 60 an der Akkuschnittstelle 58 montieren zu können, weist der Akkumulator 60 eine Akkumulator-Anschlussstelle **64** auf, die komplementär zu der Akkuschnittstelle 58 ausgebildet ist. Über die Akkuschnittstelle 58 kann das Werkzeug 24 auch mit Betriebsenergie vom Akkumulator 60 versorgt werden.

Die Akkuschnittstelle 58 ist auch eingerichtet, Steuersignale zu empfangen, mit denen wenigstens eine Funktion des Werkzeugs 24, beispielsweise die oben genannten Funktionen des Betätigungselements 56, steuerbar ist.

Das Werkzeug 24 weist weiter einen Zusatzhandgriff **66** auf, der in einem Haltebereich **68** in der Nähe der Werkzeugaufnahme 52 am Grundkörper 50 angeordnet ist.

Der Zusatzhandgriff 66 lässt sich demontieren.

Der Lagerarm 25 des Halterahmens 22 (siehe beide Fig. 1) ist komplementär zum Haltebereich 68 ausgebildet, und kann diesen zumindest teilweise umschließen, wenn das Werkzeug 24 im Halterahmen 22 aufgenommen ist.

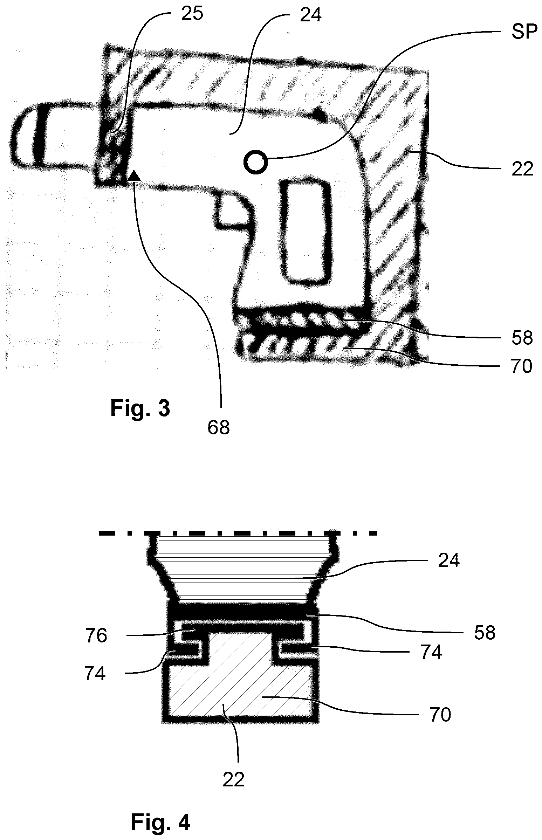

**Fig. 3** zeigt eine schematische Seitenansicht eines in einem Halterahmen 22 aufgenommenen Werkzeugs 24. Zu erkennen ist insbesondere, dass der Halterahmen 22 das Werkzeug 24 großenteils umschließt.

Das Werkzeug 24 wird an zwei Stellen im Halterahmen 22 gehalten. Insbesondere wird es gehalten über seine Akkuschnittstelle 58 und einen Halteabschnitt **70** des Halterahmens 22 sowie über seinen Haltebereich 68, den der Lagerarm 25 des Halterahmens 22 zumindest teilweise umgreift und damit zusätzlich lagert. Der Lagerarm 25 befindet sich an einer vom Halteabschnitt 70 verschiedenen Stelle des Halterahmens 22. Er befindet sich insbesondere außerhalb eines Schwerpunkts **SP** des Werkzeugs 24, sodass auch er etwaige während eines Betriebs des Werkzeugs 24 um den Schwerpunkt SP auftretende Drehmomente zumindest teilweise aufnehmen und beispielsweise diesen entgegenwirken kann.

**Fig. 4** zeigt schematisch einen Querschnitt einer Akkuschnittstelle 58 mit einem darin aufgenommenen Halteabschnitt 70 des Halterahmens 22.

Die Akkuschnittstelle 58 weist seitlich Führungsschienen **74** auf.

Der Halteabschnitt 70 ist komplementär zur Akkuschnittstelle 58, insbesondere zu den Führungsschienen 74, ausgebildet. Mit einem Einschubabschnitt 76 hintergreift der Halteabschnitt 70 die Führungsschienen 74.

Das Werkzeug 24 und der Halteabschnitt 70 sind somit durch einen Formschluss miteinander verbunden.

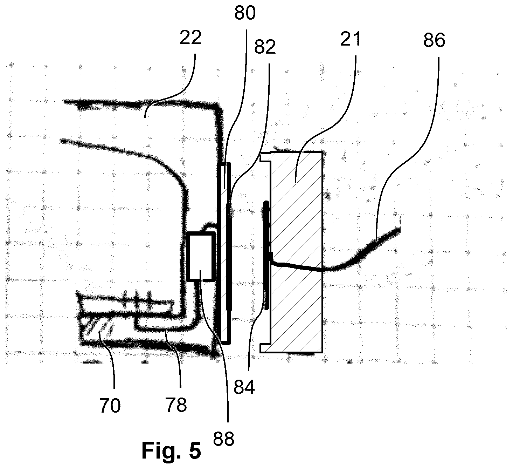

**Fig. 5** zeigt in schematischer Darstellung Querschnitte des Halterahmens 22 und der Werkzeugschnittstelle 21.

Eine elektrische Verbindung **78** verbindet den Halteabschnitt 70 elektrisch mit einer Anschlussstelle **80** des Halterahmens 22.

Die Anschlussstelle 80 ist komplementär zur Werkzeugschnittstelle 21 ausgebildet, sodass der Halterahmen 22 an der Anschlussstelle 80 an der Werkzeugschnittstelle 21 montiert werden kann. Zur Vereinfachung der Darstellung zeigt Fig. 5 einen Zustand, bei dem der Halterahmen 22 noch nicht an der Werkzeugschnittstelle 21 montiert ist.

Die Anschlussstelle 80 sowie die Werkzeugschnittstelle 21 weisen elektrische Kontakte **82, 84** auf, über die die Werkzeugschnittstelle 21 mit der elektrischen Verbindung 78 und damit auch elektrisch mit dem Halteabschnitt 70 verbunden werden kann. Über eine Versorgungsleitung **86,** die einerseits mit dem Kontakt 84 und andererseits mit einer Energiequelle, beispielsweise dem Energiespeicher 28 (siehe Fig. 1), des Bauroboters 10 (siehe Fig. 1) verbunden ist, kann somit letztlich das im Halterahmen 22 montierte Werkzeug 24 (siehe z. B. Fig. 1) mit Betriebsenergie versorgt werden.

Über die Versorgungsleitung 86 können auch Steuersignale zur Steuerung des Werkzeugs 24 vom übrigen Bauroboter 10 (siehe Fig. 1) zum Werkzeug 24 übertragen werden, wenn das Werkzeug 24 im Halterahmen 22 montiert ist.

Ein Wandler **88** ist in die elektrische Verbindung 78 integriert. Der Wandler 88 ist in diesem Ausführungsbeispiel ein programmierbarer DC/DC-Wandler. Die Programmierung kann mittels geeigneter Programmiersignale erfolgen, die an den elektrischen Kontakt 82 angelegt werden. Somit ist es möglich, die über den Kontakt 82 übertragene Betriebsenergie, im Ausführungsbeispiel in Form einer Gleichspannung von beispielsweise ca. 48 V, an eine für das Werkzeug 24 angepasste Gleichspannung, beispielsweise ca. 22 V, anzupassen.

Um unterschiedliche Arten von Werkzeugen nutzen zu können, kann der Wandler 88 auf eine Vielzahl unterschiedlicher Ausgangsspannungen programmiert werden.

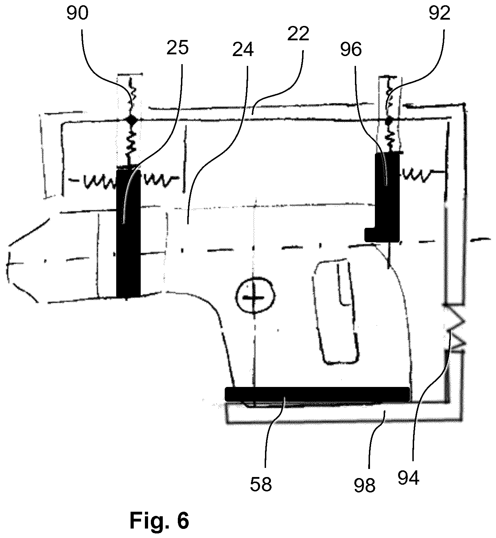

**Fig. 6** zeigt in einer stark schematisierten Darstellung einen alternativen Halterahmen 22. Soweit nicht anders beschrieben, entspricht dieser Halterahmen 22 der vorangehend beschriebenen Ausführungsform des Halterahmens 22.

Im Halterahmen 22 ist wiederum das Werkzeug 24 aufgenommen.

Der Halterahmen 22 weist mehrere Vibrationsdämpfern **90, 92, 94** auf.

Die Vibrationsdämpfer 90, 92, 94 weisen jeweils ein oder mehrere Federelemente auf. Sie sind derart ausgebildet, insbesondere angeordnet, dass vom Werkzeug 24 stammende Vibrationen lediglich gedämpft auf den Halterahmen 22 - und gegebenenfalls von dort auf einen Bauroboter 10 (siehe Fig. 1), an dem der Halterahmen 22 montiert ist - übertragen werden.

Auch in umgekehrter Richtung dämpfen die Vibrationsdämpfer 90, 92, 94 unerwünschte Vibrationen.

Der Halterahmen 22 weist neben dem Lagerarm 25 einen zweiten Lagerarm **96** auf, sodass das Werkzeug 24 an insgesamt drei Stellen vom Halterahmen 22 gehalten wird.

Der Vibrationsdämpfer 94 ist in den Halterahmen 22 integriert. Somit werden auf einen unteren Teil **98** des Halterahmens 22 wirkende Vibrationen lediglich gedämpft auf den übrigen Halterahmen 22 übertragen. Der untere Teil 98 ist wiederum über die Akkuschnittstelle 58 mit dem Werkzeug 24 fest verbunden.

### Bezugszeichenliste

- 10: Bauroboter
- 12: Fahrwerk
- 14: Gehäuse
- 16: Steuerraum
- 17: Hubvorrichtung
- 18: Manipulator
- 19: Arm
- 20: Endeffektor
- 21: Werkzeugschnittstelle
- 22: Halterahmen
- 24: Werkzeug
- 25: Lagerarm
- 26: Staubabsaugungsvorrichtung
- 28: Energiespeicher
- 36: Steuerung
- 38: Speicherbaustein
- 40: Mikroprozessor
- 42: Programmcode
- 44: Kommunikationsschnittstelle
- 50: Grundkörper
- 52: Werkzeugaufnahme
- 54: Handgriff
- 56: Betätigungselement
- 58: Akkuschnittstelle
- 60: Akkumulator
- 62: Rastmechanismus
- 64: Akkumulator-Anschlussstelle
- 66: Zusatzhandgriff
- 68: Haltebereich
- 70: Halteabschnitt
- 74: Führungsschienen
- 76: Einschubabschnitt
- 78: elektrische Verbindung
- 80: Anschlussstelle
- 82: Kontakt
- 84: Kontakt
- 86: Versorgungsleitung
- 88: Wandler
- 90: Vibrationsdämpfer
- 92: Vibrationsdämpfer
- 94: Vibrationsdämpfer
- 96: Lagerarm
- 98: Teil
- 100: Vorratsmagazin
- 102: Ablageplatz
- SP: Schwerpunkt

## Patentansprüche

1. **Halterahmen** (22) zur Aufnahme eines Werkzeugs (24), wobei der Halterahmen (22) eine Anschlussstelle (80) zum Anschluss an einen Manipulator (18) eines Bauroboters (10) aufweist, **dadurch gekennzeichnet, dass** der Halterahmen eine Akkuschnittstelle (58) zur lösbaren, insbesondere werkzeuglos lösbaren, Aufnahme eines Akkumulators (60) aufweist, wobei der Halterahmen (22) einen Halteabschnitt (70) aufweist, der komplementär zu der Akkuschnittstelle (58) ausgebildet ist.

2. Halterahmen nach dem vorherigen Anspruch, **dadurch gekennzeichnet, dass** der Halterahmen (22) einen an einer vom Halteabschnitt (70) verschiedenen Stelle befindlichen Lagerarm (25) zur zusätzlichen Lagerung des Werkzeugs (24) aufweist.

3. Halterahmen nach einem der vorhergehenden Ansprüche, **dadurch gekennzeichnet, dass** der Halterahmen (22) wenigstens einen Vibrationsdämpfer (92, 94, 96) aufweist.

4. Halterahmen nach einem der vorhergehenden Ansprüche, **dadurch gekennzeichnet, dass** wenigstens eine elektrische Verbindung (78) zwischen dem Halteabschnitt (70) und der Anschlussstelle (80) ausgebildet ist.

5. Halterahmen nach einem der vorhergehenden Ansprüche, **dadurch gekennzeichnet, dass** der Halterahmen (22) einen Wandler (88) zur Wandlung wenigstens eines elektrischen Parameters entlang der elektrischen Verbindung (78) aufweist.

6. **Bauroboter (10)** zur Ausführung von Bauaufgaben auf einer Hochbau-Baustelle, einer Tiefbau-Baustelle und / oder im Stahlbau, beispielsweise auf einer Gas- oder Ölplattform, umfassend eine, insbesondere motorisierte, mobile Plattform (12), und einen Manipulator (18), wobei der Manipulator (18) eine Werkzeugschnittstelle (21) aufweist, die komplementär zu der Anschlussstelle (80) eines Halterahmens (22) nach einem der vorherigen Ansprüche ausgebildet ist, **dadurch gekennzeichnet, dass** ein Halterahmen (22) nach einem der Ansprüche 1 bis 6 an der Werkzeugschnittstelle (21) angeordnet ist.

7. Bauroboter nach dem vorherigen Anspruch, **dadurch gekennzeichnet, dass** der Bauroboter ein Vorratsmagazin (100) aufweist, in dem wenigstens ein Werkzeug (24) mit einem Halterahmen (22) nach einem der Ansprüche 1 bis 5 aufgenommen ist.

8. Bauroboter nach einem der beiden vorhergehenden Ansprüche, **dadurch gekennzeichnet, dass** am Manipulator (18) ein Halterahmen (22) nach einem der Ansprüche 1 bis 5 montiert ist, an dem ein Werkzeug (24), das eine Akkuschnittstelle (58) aufweist, angeordnet ist.

9. Bauroboter nach einem der Ansprüche 7 bis 9, **dadurch gekennzeichnet, dass** das Werkzeug (24) derart eingerichtet ist, dass über seine Akkuschnittstelle (58) und / oder drahtlos wenigstens eine Werkzeugfunktion, beispielsweise eine Motorleistung, eine Drehfrequenz und / oder ein Betriebsmodus, steuerbar ist.

## Claims

1. Holding frame (22) for receiving a tool (24), wherein the holding frame (22) has an attachment point (80) for attachment to a manipulator (18) of a construction robot (10), **characterized in that** the holding frame has a storage battery interface (58) for detachably receiving a storage battery (60), in particular detachably without the use of tools, wherein the holding frame (22) has a holding portion (70) which is designed complementarily with respect to the storage battery interface (58).

2. Holding frame according to the preceding claim, **characterized in that** the holding frame (22) has a bearing arm (25), situated at a different point than the holding portion (70), for additionally supporting the tool (24).

3. Holding frame according to any one of the preceding claims, **characterized in that** the holding frame (22) has at least one vibration damper (92, 94, 96).

4. Holding frame according to any one of the preceding claims, **characterized in that** at least one electrical connection (78) is formed between the holding portion (70) and the attachment point (80).

5. Holding frame according to any one of the preceding claims, **characterized in that** the holding frame (22) has a converter (88) for converting at least one electrical parameter along the electrical connection (78).

6. Construction robot (10) for performing construction tasks on a building construction site, on a civil engineering construction site and/or in steel construction, for example on a gas or oil platform, comprising an in particular motorized mobile platform (12), and a manipulator (18), wherein the manipulator (18) has a tool interface (21) which is designed complementarily to the attachment point (80) of a holding frame (22) according to any one of the preceding claims, **characterized in that** a holding frame (22) according to any one of Claims 1 to 6 is arranged at the tool interface (21).

7. Construction robot according to the preceding claim, **characterized in that** the construction robot has a storage magazine (100) in which at least one tool (24) is received by means of a holding frame (22) according to any one of Claims 1 to 5.

8. Construction robot according to either one of the two preceding claims, **characterized in that** a holding frame (22) according to any one of Claims 1 to 5 is installed on the manipulator (18), on which holding frame a tool (24) is arranged which has a storage battery interface (58).

9. Construction robot according to any one of Claims 7 to 9, **characterized in that** the tool (24) is configured such that at least one tool function, for example a motor power, a rotational frequency and/or an operating mode, is controllable via the storage battery interface (58) of said tool and/or wirelessly.

## Revendications

1. Cadre de maintien (22) destiné à recevoir un outil (24), le cadre de maintien (22) possédant un point de raccordement (80) destiné au raccordement à un manipulateur (18) d'un robot de construction (10), **caractérisé en ce que** le cadre de maintien possède une interface d'accumulateur (58) destinée à la réception amovible, en particulier amovible sans outil, d'un accumulateur (60), le cadre de maintien (22) possédant une portion de maintien (70) qui est réalisée de manière complémentaire à l'interface d'accumulateur (58).

2. Cadre de maintien selon la revendication précédente, **caractérisé en ce que** le cadre de maintien (22) possède un bras d'appui (25) se trouvant à un endroit différent de la portion de maintien (70) et destiné à un appui supplémentaire de l'outil (24).

3. Cadre de maintien selon l'une des revendications précédentes, **caractérisé en ce que** le cadre de maintien (22) possède au moins un amortisseur de vibrations (92, 94, 96).

4. Cadre de maintien selon l'une des revendications précédentes, **caractérisé en ce qu'**au moins une connexion électrique (78) est formée entre la portion de maintien (70) et le point de raccordement (80).

5. Cadre de maintien selon l'une des revendications précédentes, **caractérisé en ce que** le cadre de maintien (22) possède un convertisseur (88) destiné à convertir au moins un paramètre électrique le long de la connexion électrique (78).

6. Robot de construction (10) destiné à l'exécution de tâches de construction sur un chantier de construction de bâtiments, un chantier de génie civil et/ou dans la construction métallique, par exemple sur une plate-forme de gaz ou de pétrole, comprenant une plate-forme mobile (12), en particulier motorisée, et un manipulateur (18), le manipulateur (18) possédant une interface d'outil (21) qui est complémentaire du point de raccordement (80) d'un cadre de maintien (22) selon l'une des revendications précédentes, **caractérisé en ce qu'**un cadre de maintien (22) selon l'une des revendications 1 à 6 est disposé au niveau de l'interface d'outil (21).

7. Robot de construction selon la revendication précédente, **caractérisé en ce que** le robot de construction possède un magasin de réserve (100) dans lequel est accueilli au moins un outil (24) comprenant un cadre de maintien (22) selon l'une des revendications 1 à 5.

8. Robot de construction selon l'une des deux revendications précédentes, **caractérisé en ce qu'**un cadre de maintien (22) selon l'une des revendications 1 à 5 est monté sur le manipulateur (18), au niveau duquel est disposé un outil (24) qui possède une interface de batterie (58).

9. Robot de construction selon l'une des revendications 7 à 9, **caractérisé en ce que** l'outil (24) est conçu de telle sorte qu'au moins une fonction de l'outil, par exemple une puissance de moteur, une fréquence de rotation et/ou un mode de fonctionnement, peut être commandée par le biais de son interface d'accumulateur (58) et/ou sans fil.
